# EUROPÄISCHE PATENTSCHRIFT

(11) **EP 2 363 233 B1**
(45) Veröffentlichungstag und Bekanntmachung des Hinweises auf die Patenterteilung: **08.05.2013**
(21) Anmeldenummer: 10192067.6
(22) Anmeldetag: 22.11.2010
(51) Int. Cl.: B23D 59/00

(54) **Werkzeuggerät**
Tool device
Outil

(30) Priorität: 02.03.2010 DE 102010009813
(43) Veröffentlichungstag der Anmeldung: 07.09.2011
(73) Patentinhaber: Metabowerke GmbH, 72622 Nürtingen (DE)
(72) Erfinder: Bekel, Bernhard, 49744, Geeste (DE); Bergmann, Laurentius, 49733, Haren/Ems (DE); Kindsvater, Alexander, 49733, Haren (DE)
(74) Vertreter: Raunecker, Klaus Peter

(56) Entgegenhaltungen:
- EP-A2- 1 813 400
- DE-A1- 19 803 955
- US-A- 4 159 821
- US-A1- 2010 139 809

## Beschreibung

Die Erfindung betrifft ein Werkzeuggerät, insbesondere Säge, Gehrungssäge oder Kappsäge, mit einer eine im wesentlichen ebene und horizontale Werkstückauflagefläche bildenden und in einer Längsrichtung erstreckten Auflagevorrichtung, mit einem Werkzeugträger für ein Werkzeug, wobei die Auflagevorrichtung für ein Werkstück zumindest eine erste Anschlagseinrichtung aufweist.

Ein derartiges Werkzeuggerät wird in dem Oberbegriff vom Anspruch 1 beschrieben.

Ein derartiges Werkzeuggerät ist beispielsweise als stationäres oder halbstationäres Gerät in Form einer Kappsäge oder Gehrungssäge bekannt. Ein Werkstück wird zum Bearbeiten auf die Werkstückauflagefläche gelegt. Um es gegen ein Verrutschen beim Bearbeiten zu sichern, wird es einerseits von der ersten Anschlagseinrichtung und andererseits manuell oder mittels einer Klemmvorrichtung gehalten.

Hierbei kann es beim Bearbeiten von Werkstücken, insbesondere bei der Ausführung von Sägeschnitten schräg zur Längsrichtung des Werkstücks und/oder unter extremen Neigungspositionen (Gehrungswinkeln) des Werkzeugs bezüglich der Auflagevorrichtung vorkommen, dass das Werkstück sich um den hinteren Rand der ersten Anschlagseinrichtung verdreht und/oder auf der Auflagevorrichtung verrutscht, was die Bearbeitungsqualität reduziert und die Verletzungsgefahr für einen Benutzer erhöht.

Darüber hinaus besitzen einige zu bearbeitende Werkstücke bezüglich ihrer Erstreckung in Längsrichtung geringfüge Abweichungen bezüglich einer optimal geraden Seitenkante. Dies führt dazu, dass diese an der ersten Anschlagseinrichtung nur abschnittsweise oder punktweise anliegen, wodurch die Qualität der Bearbeitung reduziert ist.

Aus der Patentanmeldung US 4,159,821 A ist eine zusammenklappbare Werkbank bekannt, die als Auflagefläche für ein zu bearbeitenden Werkstücks dient und zwei L-förmige Querbalken aufweist, welche gemeinsam zum Klemmen des Werkstücks verwendet werden können.

Weiterhin offenbart die nachveröffentlichte Patentanmeldung US 2010/139809 A1 ebenfalls eine Werkzeugbank mit relativ zueinander verstellbaren Querbalken.

Schließlich offenbart die Patentschrift LV 11795 B eine holzschneidende Bearbeitungsvorrichtung mit einer Fixierungseinrichtung zur Fixierung eines Baumstamms während des Schneideprozesses.

Aufgabe der Erfindung ist, ein Werkzeuggerät vorzuschlagen, bei dem die Qualität der Bearbeitung verbessert und die Verletzungsgefahr reduziert ist.

Die Aufgabe wird bei einem Werkzeuggerät der genannten Art erfindungsgemäß dadurch gelöst, dass die Auflagevorrichtung für das Werkstück zusätzlich mindestens eine zweite Anschlagseinrichtung aufweist, die manuell lösbar und wieder festlegbar ist und zumindest quer zur Längsrichtung der Auflagevorrichtung verstellbar ist, damit sie das Werk-stück berührend und stützend an das Werkstück anlegbar ist, wobei die zweite Anschlagseinrichtung einen säulenförmigen Körper umfasst, der an der Auflagevorrichtung exzentrisch drehbar gelagert angeordnet ist, damit er das Werkstück berührend und stützend an das Werkstück anlegbar ist.

Die Erfindung wird zudem dadurch gekennzeichnet, dass im Bereich der Auflagevorrichtung ein erster drehbarer Tischabschnitt vorgesehen, um beispielsweise schräg zur Längsrichtung des Werkstücks verlaufende Sägeschnitte ausführen zu können, wobei dieser erste drehbare Tischabschnitt den Werkzeugträger hält. Die gewählte Drehstellung des Tischabschnitts mit Werkzeugträger lässt sich festlegen, um den Bearbeitungsschritt sicher ausführen zu können. Der Werkzeugträger ist erfindungsgemäß mit dem Werkzeug in Richtung auf das Werkstück schwenkbar und/oder linear verschieblich. Ferner wird die Erfindung dadurch gekennzeichnet, dass eine Einstelleinheit vorgesehen ist, mittels derer das Werkzeug um eine horizontale Achse neigbar und in einer wählbaren Neigungsposition festlegbar ist. Die positionierbare zweite Anschlagseinrichtung erweitert die zur Verfügung stehende Anschlagsfläche in Längsrichtung der Auflagevorrichtung, wodurch die Qualität der Bearbeitung, insbesondere von Werkstücken mit großer Erstreckung in Längsrichtung, verbessert und die Verletzungsgefahr eines Benutzers reduziert wird. Zudem kann mittels der zweiten Anschlagseinrichtung ein berührendes Anlegen auch an Werkstücke realisiert werden, die in Längsrichtung geringfüge Abweichungen bezüglich einer optimal geraden Seitenkante aufweisen. Hierzu wird die zweite Anschlagseinrichtung ggf. aus einer festgelegten Position gelöst und quer zur Längsrichtung der Auflagevorrich-tung neu positioniert bis sie am Werkstück anliegt und dann wieder festgelegt.

Die erste Anschlagseinrichtung weist bevorzugt eine ebene Anschlagsfläche auf, die im Wesentlichen senkrecht auf der Werkstückauflagefläche steht. Hierdurch liegt das zu bearbeitende Werkstück flächig an der ersten Anschlagseinrichtung an.

Zum berührenden Anlegen an ein Werkstück wird der exzentrisch gelagerte Körper gedreht, wodurch sich seine Position quer zur Längsrichtung der Auflagevorrichtung ändert. Durch eine regelmäßige säulenförmige Ausbildung als Sonderform der zylindrischen Ausbildung der zweiten Anschlagseinrichtung liegt der Körper dann vertikal linienhaft am zu bearbeitenden Werkstück an.

Es erweist sich als vorteilhaft, wenn der Körper eine durchgehende Öffnung aufweist, die sich von der einen Stirnseite zur gegenüberliegenden Stirnseite erstreckt und exzentrisch zu einer Längsachse des Körpers verläuft.

Darüber hinaus erweist es sich als vorteilhaft, wenn die zweite Anschlagseinrichtung ein stiftartiges Lager umfasst, das in mindestens einer an der Auflagevorrichtung vorgesehenen korrespondierenden Öffnung festlegbar ist. Die korrespondierenden Öffnungen können sowohl Bohrungen in der Auflagevorrichtung als auch in die Werkstückauflagefläche eingelassene Nuten umfassen.

In Weiterbildung letztgenannten Erfindungsgedankens umfasst das stiftartige Lager an einem Ende einen angeformten Bereich, der einen Anschlag bildet, mit dem das stiftartige Lager an der Auflagevorrichtung anliegt, wenn es in die korrespondierende Öffnung der Auflagevorrichtung eingesteckt ist.

Bei einer Weiterbildung der Erfindung ist vorgesehen, dass die zweite Anschlagseinrichtung eine Festlegeeinheit, insbesondere mit einem Klemmhebel, umfasst, die die zweite Anschlagseinrichtung in einer ersten Funktionsstellung gegen die Auflagevorrichtung festlegt und in einer zweiten Funktionsstellung freigibt, so dass sie das Werkstück berührend und stützend an das Werkstück anlegbar ist.

Grundsätzlich könnte die Festlegeeinheit den Körper beliebig mechanisch an der Auflagevorrichtung festlegen, beispielsweise durch einen Hintergriff, insbesondere Bajonettverschluss. Allerdings wird es bevorzugt, wenn die Festlegeeinheit den Körper gegen die Werkstückauflagefläche der Auflagevorrichtung klemmt. Hierzu erweist es sich als vorteilhaft, wenn das stiftartige Lager an seinem freien Ende einen Außengewindeabschnitt aufweist und die Festlegeeinheit einen zum Außengewindeabschnitt korrespondierenden Innengewindeabschnitt auf- weist, mit dem die Festlegeeinheit auf das stiftartige Lager aufschraubbar ist und den Körper gegen die Auflagevorrichtung klemmt und so unverdrehbar stellt. Hierdurch ist ein stufen-loses Positionieren der zweiten Anschlagseinrichtung möglich.

Außerdem ist das Werkzeug vorzugsweise in einer horizontalen Richtung linear verfahrbar.

Bei einer Weiterbildung der Erfindung ist vorgesehen, dass einerseits oder beidseits neben dem ersten Tischabschnitt ein zweiter feststehender Tischabschnitt als Teil der Auflagevorrichtung für das Werkstück vorgesehen ist und dass die erste Anschlagseinrichtung am zweiten Tischabschnitt angeordnet ist und sich vorzugsweise bis über den ersten Tischabschnitt erstreckt.

Bei Werkstücken mit größerer Erstreckung in Längsrichtung der Auflagevorrichtung kann es dazu kommen, dass das Werkstück abkippt und somit von der Auflagevorrichtung rutschen würde, wenn es nicht manuell oder mittels einer Klemmvorrichtung gehalten wird. Daher erweist es sich als vorteilhaft, wenn die Auflagevorrichtung für das Werkstück ein in Längsrichtung mittels einer Führungseinrichtung verschiebbares Tischverlängerungsteil aufweist, das die Auflagevorrichtung in Längsrichtung nach außen hin erweitert. Hierdurch wird die Qualität der Bearbeitung verbessert und ein Verletzungsrisiko des Benutzers reduziert. Darüber hinaus erweist es sich als vorteilhaft, wenn die Führungseinrichtung als Stangenführungseinrichtung ausgebildet ist und wenigstens eine Stange umfasst, mit der das in Längs-richtung verschiebbare Tischverlängerungsteil gegenüber dem restlichen Teil der Auflagevorrichtung geführt verschiebbar ist.

Schließlich erweist es sich als vorteilhaft, wenn die zweite Anschlagseinrichtung am Tischverlängerungsteil angeordnet ist. Hierdurch können Abweichungen von der exakten Verlängerung in Längsrichtung, beispielsweise bedingt durch ein geringes Spiel in der Führungseinrichtung auf einfache Weise ausgeglichen werden.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Zeichnung zeigen:
- Figur 1: eine perspektivische schematische Ansicht eines erfindungsgemäßen Werkzeuggeräts;
- Figur 2: eine perspektivische Detailansicht auf eine zweite Anschlagseinrichtung gemäß Figur 1;
- Figur 3: eine Schnittansicht der zweiten Anschlagseinrichtung gemäß Figur 2 mit Schnittebene AA;
- Figur 4: eine perspektivische schematische Ansicht des erfindungsgemäßen Werkzeuggeräts gemäß Figur 1 mit in Längsrichtung verschobenen Tischverlängerungsteilen.

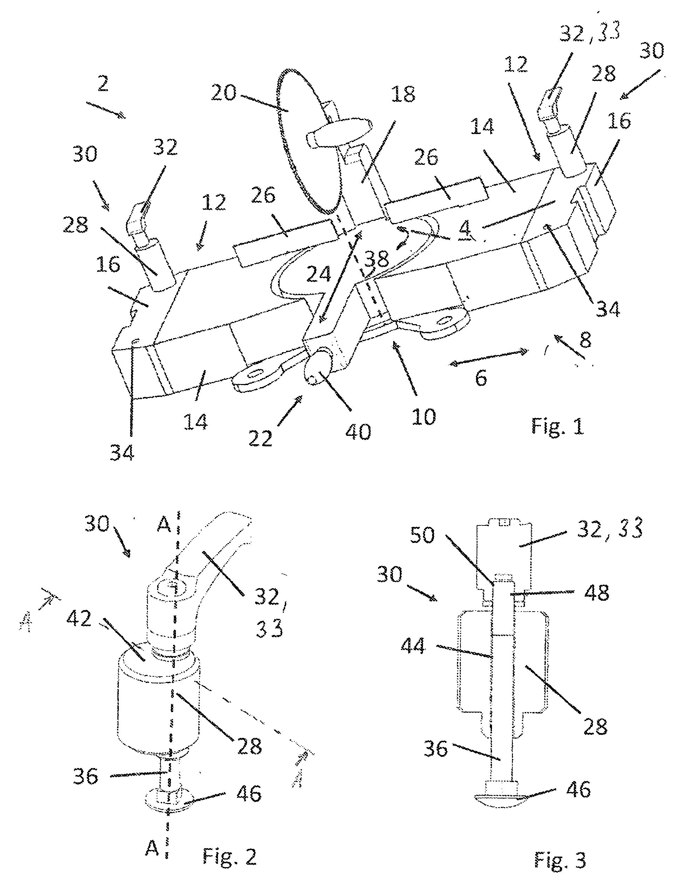

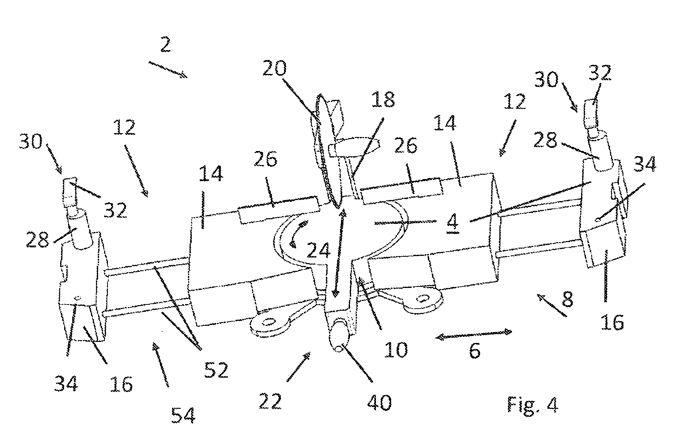

Die Figuren 1 und 4 zeigen ein insgesamt mit dem Bezugszeichen 2 bezeichnetes Werkzeuggerät in Form einer Kapp- und Gehrungssäge. Es umfasst eine eine im wesentlichen ebene Werkstückauflagefläche 4 bildende und in eine Längsrichtung 6 die größte Erstreckung aufweisende Auflagevorrichtung 8. Die Auflagevorrichtung 8 besteht aus einem ersten Tischabschnitt 10 und zwei zweiten Tischabschnitten 12, die jeweils ein Basisteil 14 und ein in Längsrichtung 6 verschiebbares Tischverlängerungsteil 16 umfassen.

An dem ersten Tischabschnitt 10 der Auflagevorrichtung 8 ist ein Werkzeugträger 18 angebracht, der ein Werkzeug 20 in Form eines rotierend antreibbaren Sägeblatts oberhalb des ersten Tischabschnitts 10 hält. Der Werkzeugträger 18 ist durch eine Einstelleinheit 22 ansteuerbar, mit der das Werkzeug 20 um eine im ersten Tischabschnitt 10 der Auflagevorrichtung 8 verlaufende horizontale Achse 24 neigbar und in mindestens einer definierten Neigungsposition festlegbar ist. Wenn der Werkzeugträger 18 in Richtung auf das Werkstück herunter geschwenkt ist, lässt sich das Sägeblatt linear in horizontaler Ebene verfahren.

Darüber hinaus ist jeweils an dem Basisteil 14 des zweiten Tischabschnitts 12 der Auflagevorrichtung 8 eine erste Anschlagseinrichtung 26 angeordnet, die sich bereichsweise auch über den ersten Tischabschnitt 10 erstreckt.

Zusätzlich ist am Tischverlängerungsteil 16 des zweiten Tischabschnitts 12 der Auflagevorrichtung 8 eine einen vorzugsweise zylindrischen Körper 28 umfassende zweite Anschlagseinrichtung 30 vorgesehen. Diese ist mittels einer Festlegeeinheit 33 mit einem Klemmhebel 32 manuell lösbar und wieder festlegbar und quer zur Längsrichtung 6 der Auflagevorrichtung 8 positionierbar. Hierdurch kann die zweite Anschlagseinrichtung 30 auf einfache Weise berührend an ein Werkstück (nicht dargestellt) angelegt werden. Sie kann so in fluchtende Ausrichtung mit der ersten Anschlagseinrichtung 26 gebracht werden.

Figur 1 zeigt das Werkzeuggerät 2, bei dem die Tischverlängerungsteile 16 an den Basisteilen 14 der Auflagevorrichtung 8 anliegen. Die Tischverlängerungsteile 16 weisen Öffnungen 34 auf, über die die zweite Anschlagseinrichtung 30 mittels eines stiftartigen Lagers 36 (in Figur 2 und 3 dargestellt) auf der Werkstückauflagefläche 4 der Auflagevorrichtung 8 angeordnet ist.

Die zweite Anschlagseinrichtung 30 ist in Figur 1 so positioniert, dass die äußere Mantelfläche des vorzugsweise zylindrischen Körpers 28 mit der ebenen, senkrecht auf der ebenen Werkstückauflagefläche 4 stehenden Anschlagsfläche der ersten Anschlagseinrichtung 26 fluchtet.

Der erste Tischabschnitt 10 ist zwischen den beiden zweiten Tischabschnitten 12 angeordnet und um eine senkrecht auf der Werkstückauflagefläche 4 stehende Achse 38 drehbar und in mindestens einer Position festlegbar. Ferner ist die Einstelleinheit 22 angedeutet, mit der der Werkzeugträger 18 sowie das Werkzeug 20 um eine im ersten Tischabschnitt 10 der Auflagevorrichtung 8 verlaufende horizontale Achse 24 neigbar und in mindestens einer definierten Neigungsposition festlegbar ist. Hierzu ist am ersten Tischabschnitt 10 ein Drehgriff 40 angeordnet, mit dem die Neigungsposition einstellbar ist.

Die Figuren 2 und 3 zeigen eine Detailansicht der zweiten Anschlagseinrichtung 30. Der vorzugsweise zylindrische Körper 28 der zweiten Anschlagseinrichtung 30 weist auf seiner Stirnseite 42 eine durchgehende Öffnung 44 auf, die sich bis zur gegenüberliegenden Stirnseite erstreckt. Durch die durchgehende Öffnung 44 ist das stiftartige Lager 36 durchgesteckt. Dieses weist an einem seiner Enden einen angeformten Bereich 46 auf, der einen Anschlag für das stiftartige Lager 36 bildet, wenn es, wie in den Figuren 1 und 4 gezeigt, von -in der Bildebene- unten durch eine der korrespondierenden Öffnungen 34 des zweiten Tischabschnitts 12 hindurchgesteckt ist. An dem anderen Ende weist das stiftartige Lager 36 einen Außengewindeabschnitt 48 auf, auf den der Klemmhebel 32 mit einem Innengewindeabschnitt 50 aufschraubbar ist. Zum Festlegen der zweiten Anschlagseinrichtung 30 wird der Klemmhebel 32 weiter auf das stiftartige Lager 36 aufgeschraubt und dadurch der Körper 28 mit der Werkstückauflagefläche 4 verspannt. Der Klemmhebel 32 befindet sich dann in seiner ersten Funktionsstellung. Zum Lösen der zylindrischen Körpers 28, um ihn an das Werkstück berührend anzulegen, wird der Klemmhebel 32 in Aufschraubrichtung betätigt, wodurch der Körper 28 wieder um das stiftartige Lager 36 drehbar ist. Solchenfalls befindet sich der Klemmhebel 32 dann in seiner zweiten Funktionsstellung.

Figur 4 zeigt das Werkzeuggerät 2, bei dem die Tischverlängerungsteile 16 jeweils in Längsrichtung 6 nach außen bewegt wurden. Hierfür ist eine Längsführungseinrichtung 54 mit Stangen 52 vorgesehen. Ungenauigkeiten aufgrund eines geringen Spiels bei den insbesondere teleskopierbaren Stangen 52 können durch die zweite Anschlagseinrichtung 30 einfach ausgeglichen werden.

## Patentansprüche

1. Werkzeuggerät (2), insbesondere Säge, Gehrungssäge oder Kappsäge, mit einer eine im wesentlichen ebene und horizontale Werkstückauflagefläche (4) bildenden und in einer Längsrichtung (6) erstreckten Auflagevorrichtung (8), mit einem Werkzeugträger (18) für ein Werkzeug (20), wobei die Auflagevorrichtung (8) für das Werkstück zumindest eine erste Anschlagseinrichtung (26) aufweist, wobei die Auflagevorrichtung (8) für das Werkstück zusätzlich mindestens eine zweite Anschlagseinrichtung (30) aufweist, die manuell lösbar und wieder festlegbar ist und zumindest quer zur Längsrichtung (6) der Auflagevorrichtung (8) verstellbar ist, damit sie das Werkstück berührend und stützend an das Werkstück anlegbar ist, und wobei die zweite Anschlagseinrichtung (30) einen säulenförmigen Körper (28) umfasst, der an der Auflagevorrichtung (8) exzentrisch drehbar gelagert angeordnet ist, damit er das Werkstück berührend und stützend an das Werkstück anlegbar ist, **dadurch gekennzeichnet, dass** im Bereich der Auflagevorrichtung (8) ein erster drehbarer Tischabschnitt (10) vorgesehen ist, der den Werkzeugträger (18) hält, dass der Werkzeugträger (18) mit dem Werkzeug (20) in Richtung auf das Werkstück schwenkbar und/oder linear verschieblich ist, und dass eine Einstelleinheit (22) vorgesehen ist, mittels derer das Werkzeug (20) um eine horizontale Achse (24) neigbar und in einer wählbaren Neigungsposition festlegbar ist.

2. Werkzeuggerät (2) nach Anspruch 1, **dadurch gekennzeichnet, dass** der Körper (28) eine durchgehende Öffnung (44) aufweist, die sich von der einen Stirnseite (42) zur gegenüberliegenden Stirnseite (42) erstreckt und exzentrisch zu einer Längsachse des Körpers (28) verläuft.

3. Werkzeuggerät (2) nach Anspruch 1 oder 2, **dadurch gekennzeichnet, dass** die zweite Anschlagseinrichtung (30) ein stiftartiges Lager (36) umfasst, das in mindestens einer an der Auflagevorrichtung (8) vorgesehenen korrespondierenden Öffnung (34) festlegbar ist.

4. Werkzeuggerät (2) nach Anspruch 3, **dadurch gekennzeichnet, dass** das stiftartige Lager (36) an einem Ende einen angeformten Bereich (46) umfasst, der einen Anschlag bildet, mit dem das stiftartige Lager (36) an der Auflagevorrichtung (8) anliegt, wenn es in die korrespondierende Öffnung (34) der Auflagevorrichtung (8) eingesteckt ist.

5. Werkzeuggerät (2) nach einem oder mehreren der vorhergehenden Ansprüche, **dadurch gekennzeichnet, dass** die zweite Anschlagseinrichtung (30) eine Festlegeeinheit (33), insbesondere Klemmhebel (32), umfasst, die die zweite Anschlagseinrichtung (30) in einer ersten Funktionsstellung gegen die Auflagevorrichtung (8) festlegt und in einer zweiten Funktionsstellung freigibt, so dass sie das Werkstück berührend und stützend an das Werkstück anlegbar ist.

6. Werkzeuggerät (2) nach Anspruch 5, **dadurch gekennzeichnet, dass** das stiftartige Lager (36) an seinem freien Ende einen Außengewindeabschnitt (48) aufweist und die Festlegeeinheit (33) einen zum Außengewindeabschnitt (48) korrespondierenden Innengewindeabschnitt (50) aufweist, mit dem die Festlegeeinheit (33) auf das stiftartige Lager (36) aufschraubbar ist und den Körper (36) gegen die Auflagevorrichtung (8) klemmt und so unverdrehbar stellt.

7. Werkzeuggerät (2) nach einem der vorhergehenden Ansprüche, **dadurch gekennzeichnet, dass** einerseits oder beidseits neben dem ersten Tischabschnitt (10) ein zweiter feststehender Tischabschnitt (12) als Teil der Auflagevorrichtung (8) für das Werkstück vorgesehen ist und dass die erste Anschlagseinrichtung (26) am zweiten Tischabschnitt (12) angeordnet ist und sich vorzugsweise bis über den ersten Tischabschnitt (10) erstreckt.

8. Werkzeuggerät (2) nach einem der vorhergehenden Ansprüche, **dadurch gekennzeichnet, dass** die Auflagevorrichtung (8) für das Werkstück ein in Längsrichtung (6) mittels einer Führungseinrichtung (54) verschiebbares Tischverlängerungsteil (16) aufweist, das die Auflagevorrichtung (8) in Längsrichtung (6) nach außen hin erweitert.

9. Werkzeuggerät (2) nach Anspruch 8, **dadurch gekennzeichnet, dass** die Führungseinrichtung (54) als Stangenführungseinrichtung ausgebildet ist und wenigstens eine Stange (52) umfasst, mit der das in Längsrichtung (6) verschiebbare Tischverlängerungsteil (16) gegenüber dem restlichen Teil der Auflagevorrichtung (8) geführt verschiebbar ist.

10. Werkzeuggerät (2) nach Anspruch 8 oder 9, **dadurch gekennzeichnet, dass** die zweite Anschlagseinrichtung (30) am Tischverlängerungsteil (16) angeordnet ist.

## Claims

1. Tool appliance (2), in particular a saw, mitre saw or chop saw, with a supporting device (8) which forms a substantially flat and horizontal workpiece-supporting surface (4) and is extended in a longitudinal direction (6), with a tool-carrier (18) for a tool (20); wherein the supporting device (8) for the workpiece has at least a first stop apparatus (26); wherein said supporting device (8) for the workpiece additionally has at least a second stop apparatus (30) which can be manually released and immobilised again and can be adjusted at least transversely to the longitudinal direction (6) of the supporting device (8), so that said second stop apparatus can be placed against the workpiece in a manner touching and supporting the latter; and wherein the second stop apparatus (30) comprises a pillar-shaped body (28) which is arranged so as to be mounted on the supporting device (8) in an eccentrically rotatable manner, so that said body can be placed against the workpiece in a manner touching and supporting the latter, **characterised in that** there is provided, in the region of the supporting device (8), a first, rotatable table section (10) which holds the tool-carrier (18), that said tool-carrier (18) is displaceable, with the tool (20), towards the workpiece in a pivotable and/or linear manner, and that there is provided a setting unit (22) by means of which the tool (20) can be inclined about a horizontal axis (24) and immobilised in a selectable position of inclination.

2. Tool appliance (2) according to claim 1, **characterised in that** the body (28) has a through aperture (44) which extends from one end face (42) to the opposite end face (42) and runs eccentrically in relation to a longitudinal axis of the body (28).

3. Tool appliance (2) according to claim 1 or 2, **characterised in that** the second stop apparatus (30) comprises a pin-type bearing (36) which can be immobilised in at least one corresponding aperture (34) provided on the supporting device (8).

4. Tool appliance (2) according to claim 3, **characterised in that** the pin-type bearing (36) comprises, at one end, a formed-on region (46) which forms a stop by means of which said pin-type bearing (36) rests against the supporting device (8) when said bearing is slipped into the corresponding aperture (34) in the supporting device (8).

5. Tool appliance (2) according to one or more of the preceding claims, **characterised in that** the second stop apparatus (30) comprises an immobilising unit (33), in particular a clamping lever (32), which immobilises said second stop apparatus (30) against the supporting device (8) in a first operating position and frees it in a second operating position, so that said stop apparatus can be placed against the workpiece in a manner touching and supporting the latter.

6. Tool appliance (2) according to claim 5, **characterised in that** the pin-type bearing (36) has an externally threaded section (48) at its free end and the immobilising unit (33) has an internally threaded section (5) which corresponds with the externally threaded section (48) and by means of which said immobilising unit (33) can be screwed onto the pin-type bearing (36) and clamps the body (36) against the supporting device (8) and thus positions it in a non-twistable manner.

7. Tool appliance (2) according to one of the preceding claims, **characterised in that** there is provided, on one or both sides next to the first table section (10), a second, fixed table section (12) as part of the supporting device (8) for the workpiece, and that the first stop apparatus (26) is arranged on the second table section (12) and preferably extends over the first table section (10).

8. Tool appliance (2) according to one of the preceding claims, **characterised in that** the supporting device (8) for the workpiece has a table-prolonging part (16) which can be displaced in the longitudinal direction (6) by means of a guiding apparatus (54) and which extends said supporting device (8) outwards in said longitudinal direction (6).

9. Tool appliance (2) according to claim 8, **characterised in that** the guiding apparatus (54) is constructed as a bar-type guiding apparatus and comprises at least one bar (52) by means of which the table-prolonging part (16) which is displaceable in the longitudinal direction (6) is displaceable in a guided manner in relation to the remaining part of the supporting device (8).

10. Tool appliance (2) according to claim 8 or 9, **characterised in that** the second stop apparatus (30) is arranged on the table-prolonging part (16).

## Revendications

1. Machine outil (2), notamment scie, scie circulaire ou scie à onglet, comportant une installation d'appui (8) formant une surface d'appui (4) de pièce à travailler sensiblement plane et horizontale et s'étendant dans sa direction longitudinale (6), équipée d'un support d'outillage (18) pour un outil (20), dans laquelle l'installation d'appui (8) comporte au moins une première installation de butée (26), dans laquelle l'installation d'appui (8) de la pièce à travailler comporte au moins une seconde installation de butée (30), qui peut être libérée manuellement et à nouveau bloquée et qui peut être positionnée transversalement par rapport à la direction longitudinale (6) de l'installation d'appui (8), de telle manière qu'elle puisse appuyer la pièce à travailler en la contactant et la soutenant, et dans laquelle la seconde installation de butée (30) comporte un corps (28) en colonne qui est monté de façon à tourner en excentrique contre l'installation d'appui (8), de telle manière qu'elle puisse appuyer la pièce à travailler en la contactant et la soutenant, **caractérisée en ce que**, dans la zone de l'installation d'appui (8), une première section de table rotative (10) est prévue pour maintenir le support d'outillage (18), **en ce que** le support d'outillage (18) ainsi que l'outil (20) sont pivotants en direction de la pièce à travailler et/ou sont coulissant linéairement, et en ce une unité de réglage (22) est prévue, par laquelle l'outil (20) peut basculer autour d'un axe horizontal (24) et peut être bloqué à souhait dans une position inclinée sélectionnée.

2. Machine outil (2) selon la revendication 1, **caractérisée en ce que** le corps (28) comporte une ouverture traversante (44) qui s'étend depuis la première face frontale (42) jusqu'à la face frontale opposée (42) et est disposée de façon excentrique par rapport à l'axe longitudinal du corps (28).

3. Machine outil (2) selon la revendication 1 ou 2, **caractérisée en ce que** la seconde instillation de butée (30) comporte un palier (36) en forme de téton qui peut être fixé, dans au moins une ouverture correspondante (34) ménagée dans l'installation d'appui (8).

4. Machine outil (2) selon la revendication 3, **caractérisée en ce que** le palier (36) en forme de téton comporte à une extrémité une zone façonnée (46) qui constitue une butée, grâce à laquelle le palier (36) en forme de téton prend appui contre l'installation d'appui (8), lorsqu'il est engagé dans l'ouverture correspondante (34) ménagée dans l'installation d'appui (8).

5. Machine outil (2) selon une ou plusieurs des revendications précédentes, **caractérisée en ce que** la seconde installation de butée (30) comporte une unité de fixation (33), en particulier un levier de serrage (32) qui fixe la seconde installation de butée (30) dans une première position de travail contre l'installation d'appui (8) et la libère dans une seconde position de travail, de telle manière qu'elle puisse être en appui contre la pièce à travailler et soutenir en la contactant et la soutenant.

6. Machine outil (2) selon la revendication 5, **caractérisée en ce que** le palier (36) en forme de téton comporte à son extrémité libre une section filetée extérieurement (48) et l'unité de fixation (33) comporte une section filetée intérieurement (50) correspondant à la section filetée extérieurement (48), par lesquelles l'unité de fixation (33) peut être vissée sur le palier (36) en forme de téton et le corps (36) serré contre l'installation d'appui (8) et ne peut pas être déplacé.

7. Machine outil (2) selon l'une des revendications précédentes, **caractérisée en ce que**, d'un côté ou des deux côtés de la première section de table (10), est montée une deuxième section de table fixe (12) constituant une pièce de l'installation d'appui (8) pour la pièce à travailler, et **en ce que** la première installation de butée (26) est fixée à deuxième section de table fixe (12) et s'étend préférentiellement jusque tous le longs de la première section de table (10).

8. Machine outil (2) selon l'une des revendications précédentes, **caractérisée en ce que** l'installation d'appui (8) pour la pièce à travailler comporte une pièce de prolongement de table (16) coulissant au moyen d'une installation de guidage (54) dans une direction longitudinale (16), qui étend vers l'extérieur l'installation d'appui (8) dans la direction longitudinale (16).

9. Machine outil (2) selon la revendication 8, **caractérisée en ce que** l'installation de guidage (54) est constituée par un guide en forme de tringle et comporte au moins une barre (52) sur laquelle, le prolongement de table (16) coulissant dans la direction longitudinale (6), est guidé en coulissement par rapport au reste de l'installation d'appui (8).

10. Machine outil (2) selon la revendication 8 ou 9, **caractérisée en ce que** la seconde installation de butée (30) est montée sur le prolongement de table (16).
